(19) Europäisches Patentamt
European Patent Office
Office européen des brevets

(11) **EP 2 100 178 B1**

(12) **FASCICULE DE BREVET EUROPEEN**

(45) Date de publication et mention de la délivrance du brevet:
**04.08.2010 Bulletin 2010/31**

(21) Numéro de dépôt: **07847695.9**

(22) Date de dépôt: **03.12.2007**

(51) Int Cl.:
*G02B 13/16* ^(2006.01)

(86) Numéro de dépôt international:
**PCT/EP2007/063184**

(87) Numéro de publication internationale:
**WO 2008/071580 (19.06.2008 Gazette 2008/25)**

(54) **SYSTEME D'IMAGERIE INFRAROUGE IR2-IR3 BI-CHAMP COMPACT**

KOMPAKTES ZWEIFELD-IR2-IR3-INFRAROT-BILDGEBUNGSSYSTEM

COMPACT DUAL-FIELD IR2-IR3 INFRARED IMAGING SYSTEM

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **13.12.2006 FR 0610872**

(43) Date de publication de la demande:
**16.09.2009 Bulletin 2009/38**

(73) Titulaire: **THALES**
**92200 Neuilly sur Seine (FR)**

(72) Inventeurs:
- **JOUGLA, Paul**
  **75015 Paris (FR)**
- **FORESTIER, Bertrand**
  **75015 Paris (FR)**

(74) Mandataire: **Henriot, Marie-Pierre et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**WO-A-99/59015     FR-A- 2 760 924**
**FR-A1- 2 623 298**

- **AKRAM M N: "Design of a dual field-of-view optical system for infrared focal-plane arrays" PROCEEDINGS OF THE SPIE - THE INTERNATIONAL SOCIETY FOR OPTICAL ENGINEERING, vol. 4767, 2002, pages 13-23, XP002446799 SPIE-INT. SOC. OPT. ENG, USA**

**Description**

· Le domaine de l'invention est celui des systèmes infrarouges PC (petit champ) GC (grand champ) compacts.

On connaît une caméra PC (3° x 2,25°) et GC (9° x 6.75°) ouverte à F/2.7, de focale petit champ $F_{PC}$ égale à environ 180 mm, de focale grand champ $F_{GC}$ égale à environ 60 mm, équipée d'un détecteur matriciel IR3 (7,5 -10 µm) à multi-puits quantiques.

Le comportement photométrique de cette caméra est optimisé pour l'infrarouge thermique. En effet :

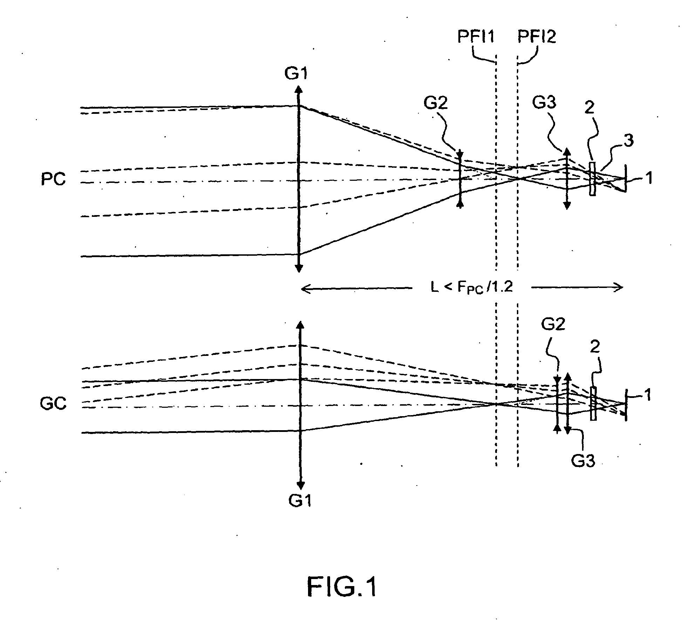

- le diaphragme d'ouverture est matérialisé par l'écran froid 3 du détecteur 1 (représentés figure 1) protégé par son hublot 2,
- il n'y a pas de vignettage car le seul élément limitant les faisceaux est le diaphragme d'ouverture.

Cette caméra est très compacte. En effet :

- le trajet L du faisceau le long de l'axe optique entre le dioptre d'entrée et le plan focal (le détecteur 1) est inférieur à $F_{PC}/1.2$,
- la section du conduit occupé par les faisceaux optiques est inférieure à $F_{PC}/2.5$ entre un plan situé à $F_{PC}$ mm en amont du dioptre d'entrée et le plan focal.

Cette compacité est obtenue grâce à :

- une pupille d'entrée petit champ située au voisinage de la lentille de tête : cette caractéristique impose la présence d'un PFI (Plan Focal Intermédiaire) dans la combinaison optique,
- une pupille d'entrée grand champ réelle c'est-à-dire située en amont de la lentille de tête.

La combinaison optique de cette caméra comprend les groupes dioptriques suivants décrits en relation avec la figure 1 :

a. un groupe de tête convergent G1 de focale F, avec $F<F_{PC}/2$ donc très ouvert,
b. un groupe divergent de changement de champ G2 mobile le long de l'axe optique ; ce groupe est situé en amont du PFI en configuration PC et en aval du PFI en configuration GC,
c. un groupe relais G3 imageant le PFI sur le plan focal du détecteur.

Le groupe G1 est achromatisé dans la bande IR3 grâce à une des séquences classiques Ge(+)/ZnSe(-) ou Ge(+)/ZnS(-) ou Ge(+)/DOE(+), avec Ge pour germanium, ZnSe pour séléniure de zinc, ZnS pour sulfure de zinc, DOE pour élément diffractif, + pour convergent, - pour divergent.

Le but de l'invention est de pouvoir utiliser une telle caméra et plus généralement un système d'imagerie également dans la bande IR2 (3,5 - 5 µm) avec un seul détecteur. Les 2 bandes ne sont toutefois pas utilisées en simultané: on sélectionne la bande utile en jouant sur la polarisation du détecteur.

La caméra existante, et plus précisément le groupe de tête G1, présente d'importantes aberrations chromatiques en IR2 qui compromettent , son utilisation dans cette bande spectrale.

Le but de l'invention est d'obtenir un système d'imagerie IR2-IR3 compact bi-champ ne présentant pas les inconvénients sus-mentionnés.

L'invention est basée sur l'utilisation d'un doublet de matériaux pour l'ensemble des lentilles et d'un élément diffractif notamment pour le groupe de tête.

Plus précisément, l'invention a pour objet un système d'imagerie bi-champ (PC et GC) comportant un détecteur optronique et une combinaison optique bichamp de focales petit champ $F_{PC}$, grand champ $F_{GC}$ présentant sur un axe optique :

- une lentille de tête,
- une pupille d'entrée petit champ située au voisinage de la lentille de tête,
- une pupille d'entrée grand champ réelle c'est-à-dire située en amont de la lentille de tête,
- un plan focal intermédiaire (PFI),

la combinaison optique comprenant sur l'axe optique les groupes dioptriques suivants :

- un groupe dioptrique de tête G1 convergent de focale F, avec $F<F_{PC}/2$, ce groupe G1 comprenant la lentille de tête,
- un groupe divergent de changement de champ G2 mobile le long de l'axe optique, ce groupe étant situé en amont du PFI en configuration PC et en aval du PFI en configuration GC,
- un groupe relais G3 imageant le PFI sur le plan focal du détecteur.

Il est principalement **caractérisé en ce que** le détecteur est un détecteur IR2 et IR3 refroidi, et en ce que la combinaison optique comprend 6 lentilles dont au moins une lentille diffractive dans le groupe de tête G1 et en ce que les lentilles de la combinaison optique sont composées de matériaux choisis parmi 2 matériaux.

L'invention permet de diminuer la puissance des lentilles et donc leur nombre tout en conservant une bonne qualité optique, c'est-à-dire une bonne FTM. On obtient alors un système d'imagerie IR2-IR3 bi-champ compact.

De préférence, les matériaux sont Ge et ZnS ou Ge et ZnSe : les triplets Ge(+)/élément diffractif(+)/ZnS(+) ou Ge(+)/élément diffractif(+)/ZnSe(+) sont utilisés dans le groupe de tête G1.

Selon une caractéristique de l'invention, le groupe de tête G1 comprend une lentille L1A convergente diffractive en Ge, une lentille L1B convergente en ZnS et une lentille divergente L1C en Ge.

Avantageusement, le profil diffractif de la lentille convergente L1A est convergent et optimisé pour l'ordre 1 de diffraction en IR3, et pour l'ordre 2 de diffraction en IR2.

Selon une caractéristique de l'invention, le groupe G2 comprend une lentille L2 divergente en Ge, le relais G3 comprend deux lentilles convergentes en Ge.

Avantageusement, le relais G3 comprend au moins une lentille diffractive L3A telle que son profil diffractif est convergent et optimisé pour l'ordre 1 de diffraction en IR3, et pour l'ordre 2 de diffraction en IR2.

Selon une autre caractéristique de l'invention, le détecteur est un détecteur matriciel ou linéaire, à multi-puits quantiques.

Avantageusement, le système d'imagerie présentant un écran froid, celui-ci est utilisé comme diaphragme d'ouverture et tout vignettage est évité car seul ce diaphragme limite les faisceaux optiques.

D'autres caractéristiques et avantages de l'invention apparaîtront à la lecture de la description détaillée qui suit, faite à titre d'exemple non limitatif et en référence aux dessins annexés dans lesquels :

la figure 1 déjà décrite représente schématiquement la combinaison optique d'une caméra PC et GC, compacte selon l'état de la technique,
la figure 2 représente schématiquement un mode de réalisation d'un système d'imagerie selon l'invention, en mode PC et GC,
la figure 3 représente schématiquement un viseur de char comportant un système d'imagerie selon l'invention.

D'une figure à l'autre, les mêmes éléments sont repérés par les mêmes références.

On va à présent décrire les fonctions des différents éléments de la combinaison optique du système d'imagerie selon l'invention. Ces éléments sont globalement identiques à ceux de la caméra décrite en relation avec la figure 1.

Le groupe dioptrique de tête G1 image la scène sur un plan focal intermédiaire PFI1.

Cette image intermédiaire, virtuelle en petit champ et réelle en grand champ est reprise par le groupe divergent G2 (comprenant préférentiellement une seule lentille L2), qui donne une image sur un second plan image intermédiaire PFI2, réel en petit champ et virtuel en grand champ. La lentille divergente L2 est placée avant les plans images intermédiaires PFI1 et PFI2 en petit champ, après les plans image intermédiaires PFI1 et PFI2 en grand champ. Les 2 plans PFI1 et PFI2 sont positionnés au même endroit pour les 2 configurations petit champ ou grand champ. La lentille divergente image le premier plan PFI1 sur le deuxième PFI2 avec un grandissement de $\sqrt{(F_{PC}/F_{GC})}$ en petit champ, et de $1/\sqrt{(F_{PC}/F_{GC})}$ en grand champ. Cette fonction permet d'avoir une focale petit champ $F_{PC}/F_{GC}$ fois plus grande que la focale grand champ.

Le deuxième plan focal PFI2 est ensuite repris par le groupe relais G3 de grandissement compris entre 1.3 et 1.5 environ. Son plan objet est réel.

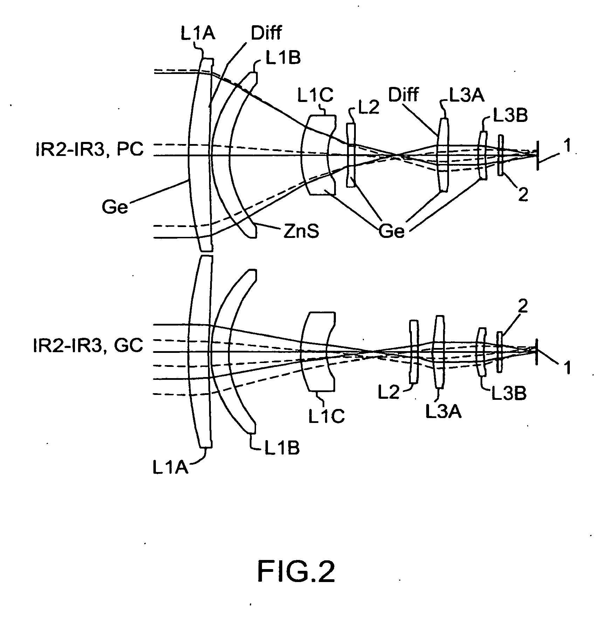

Le groupe relais G3 comprend de préférence 2 lentilles L3A et L3B comme représenté figure 2.

Le chromatisme interbande n'étant pas corrigé, les plans focaux intermédiaires IR2 et IR3 de l'objectif de tête ne sont pas superposés. Le groupe G2, mobile sur l'axe pour permettre le changement de champ, permet en outre de refocaliser l'image sur le détecteur lorsque l'utilisateur change de bande spectrale.

Le mouvement axial du groupe G2 permet en outre d'assurer une refocalisation de l'image lorsque la température interne du système d'imagerie change ou afin d'observer à distance rapprochée.

Afin d'affiner la refocalisation en thermique, à distance rapprochée ou lors du changement de bande spectrale, une des lentilles du groupe G3 (préférentiellement la lentille L3A) peut aussi être rendue mobile sur l'axe.

L3B est préférentiellement une lentille de microscanning qui permet de translater l'image de la scène sur le détecteur de 1/2 pixel. Cette fonction permet d'augmenter la résolution du système d'imagerie.

Cette configuration permet d'obtenir un système d'imagerie PC-GC ; la pupille d'entrée petit champ est située au voisinage de la lentille de tête, et la pupille d'entrée grand champ est réelle c'est-à-dire située en amont de la lentille de tête, ce qui facilite l'implantation du système d'imagerie dans un système périscopique de visée car on élimine ainsi le risque de vignettage des faisceaux GC.

Dans cette architecture, les aberrations chromatiques du groupe de tête G1 sont les plus importantes.

On rappelle les équations du chromatisme. Soit un module optique, de puissance $\phi$, que l'on souhaite corriger du chromatisme axial dans chacune des 2 bandes spectrales. Ce module comprend 3 lentilles fabriquées chacune dans un matériau différent. On note A, B et C les 3 lentilles, et :

$$\left\{ \begin{array}{l} \phi A, \phi B, \phi C \text{ les puissances respectives des 3 lentilles,} \\ \nu 1A \text{ et } \nu 2A \text{ les constringences IR2 et IR3 du matériau A,} \\ \nu 1B \text{ et } \nu 2B \text{ les constringences IR2 et IR3 du matériau B,} \\ \nu 1C \text{ et } \nu 2C \text{ les constringences IR2 et IR3 du matériau C.} \end{array} \right.$$

Les équations pour la correction paraxiale du chromatisme d'un triplet sont les suivantes:

$$\left\{ \begin{array}{l} \phi = \phi A + \phi B + \phi C \\ \phi A / \nu 1A + \phi B / \nu 1B + \phi C / \nu 1C = 0 \quad \text{(correction du chromatisme IR2)} \\ \phi A / \nu 2A + \phi B / \nu 2B + \phi C / \nu 2C = 0 \quad \text{(correction du chromatisme IR3)} \end{array} \right.$$

Ces équations assurent la correction du chromatisme sur la bande IR2, et sur la bande IR3. Par contre il peut subsister du chromatisme interbande : les plans focaux intermédiaires IR2 et IR3 de l'objectif de tête ne sont pas superposés.

Le triplet de matériaux ZnSe(+)/Ge(-)/ZnS(-) est connu pour assurer une achromatisation dans les bandes IR2 et IR3. Mais l'utilisation de ce triplet conduit à des puissances de lentilles en ZnSe et ZnS qui sont bien plus importantes que la puissance du groupe de tête. On est donc limité à des groupes de tête peu puissants ou peu ouverts ou encombrants. Si par exemple, la puissance d'un triplet de lentilles respectivement en ZnSe, Ge et ZnS vaut 1, les puissances de ces lentilles valent respectivement environ 2.7, -0.6 et -1.1. L'ouverture de la lentille en ZnSe est donc 2.7 fois plus importante que l'ouverture du groupe de tête qui est déjà très ouvert.

Avec les contraintes de compacité de l'invention on est alors conduit à multiplier le nombre de lentilles ( au moins 7) dans le groupe de tête afin de limiter l'ouverture de chacune d'entre elles à une valeur raisonnable. Ce grand nombre de lentilles augmente significativement le coût de la combinaison. En outre bien que la fonction de transfert de modulation (FTM) obtenue soit suffisante sur le plan théorique, elle est considérablement dégradée dès qu'on prend en compte les tolérances de fabrication et de montage des lentilles.

Selon l'invention, une des lentilles de l'objectif de tête est une lentille diffractive et les matériaux utilisés sont Ge et ZnS (ou ZnSe).

Le profil blazé de la lentille diffractive (noté Diff sur la figure 2) est optimisé pour avoir simultanément un bon rendement dans l'ordre 1 de diffraction pour la bande IR3, et dans l'ordre 2 pour la bande IR2. Ceci est rendu possible par la position des pics de sensibilité IR3 et IR2 : la longueur d'onde du pic de sensibilité IR3 vaut environ deux fois la longueur d'onde du pic de sensibilité IR2.

Le chromatisme le plus important est corrigé de la manière suivante qui représente un mode de réalisation de l'invention représenté figure 2.

L'objectif de tête comprend trois lentilles L1A, L1B et L1 C.

L1A est une lentille asphéro-diffractive en Germanium. On place une lentille en Germanium en tête pour protéger le système d'imagerie des agressions extérieures, qu'elles soient de nature électromagnétique ou climatique.

L1B est en ZnS ou ZnSe:

L'ensemble L1A et L1B est corrigé du chromatisme dans chacune des 2 bandes IR2 et IR3.

La lentille L1C est en Germanium de même que les lentilles L2, L3A et L3B.

En résumé, 2 solutions sont envisagées pour le groupe G1 :

1/ doublet lentille Germanium + lentille ZnS + profil diffractif sur une des 2 lentilles. Pour un groupe convergent , la lentille en Germanium, le profil diffractif et la lentille en ZnS sont convergents.

2/ doublet lentille Germanium + lentille ZnSe + profil diffractif sur une des 2 lentilles. Pour un groupe convergent,

la lentille en Germanium, le profil diffractif et la lentille en ZnSe sont convergents.

Les solutions 1/ et 2/ sont équivalentes en performances, mais la solution 1/ sera préférée pour des raisons de coût car le ZnS est moins cher que le ZnSe.

Le chromatisme a été corrigé sur le groupe G1 principalement responsable du chromatisme. Cette correction peut être améliorée en corrigeant également le chromatisme des autres groupes G2 et G3.

La hauteur du rayon d'ouverture étant relativement petite sur chacune des lentilles L2, L3A et L3B des groupes G2 et G3 par rapport au demi-diamètre de la pupille d'entrée, la contribution de ces lentilles au chromatisme de la combinaison est intrinsèquement faible. Il suffit donc de réaliser ces composants dans un matériau relativement peu chromatique dans chacune des bandes utiles. Le meilleur candidat est le Germanium.

L2, L3A et L3B sont en Germanium. L2 et L3A sont asphériques, L3B est sphérique.

Toutefois, pour améliorer la FTM, il est utile de diminuer le chromatisme introduit par L3A. Une correction parfaite avec un triplet n'est pas nécessaire : on peut utiliser un doublet de matériaux. Ces doublets sont calculés à partir des équations suivantes :

Comme précédemment on note $\phi$ la puissance du module optique, en l'occurrence L3A,

$$
\begin{cases}
\phi A,\ \phi B \text{ les puissances respectives des 2 composants optiques,} \\
\nu 1A \text{ et } \nu 2A \text{ les constringences IR2 et IR3 du composant A,} \\
\nu 1B \text{ et } \nu 2B \text{ les constringences IR2 et IR3 du composant B,} \\
\lambda 1 \text{ la longueur d'onde de pic de sensibilité de la bande IR2,} \\
\lambda 2 \text{ la longueur d'onde de pic de sensibilité de la bande IR3.}
\end{cases}
$$

On note $\nu 1$ et $\nu 2$ les constringences équivalentes du doublet dans les bandes spectrales IR2 et IR3.

Elles sont définies par l'équation suivante :

$$\phi/\nu i = \phi A/\nu iA + \phi B/\nu iB \text{ avec } i=1 \text{ ou } 2.$$

Les équations qui permettent de calculer les puissances $\phi A$ et $\phi B$ sont les suivantes :

$$
\begin{cases}
\phi = \phi A + \phi B \\
1/\lambda 1 * (\phi A/\nu 1A + \phi B/\nu 1B) = -1/\lambda 2 * (\phi A/\nu 2A + \phi B/\nu 2B)
\end{cases}
$$

Ces équations garantissent que l'écart normal de chromatisme axial vaudra le même nombre de longueurs d'onde dans chacune des deux bandes spectrales respectives.

Les meilleurs doublets candidats pour L3A sont résumés dans le tableau ci-dessous. Ils sont classés par ordre de $\nu 1$ décroissant en valeur absolue.

| $\sqrt{\phi A^2 + \phi B^2}$ | A | $\nu 1A$ | $\nu 2A$ | B | $\nu 1B$ | $\nu 2B$ | $\phi A$ | $\phi B$ | $\nu 1$ | $\nu 2$ |
|---|---|---|---|---|---|---|---|---|---|---|
| 0.99 | IG4 | 388 | 676 | DOE* | -4 | -7 | 0.99 | 0.009 | -25985 | 13967 |
| 0.99 | GASIR1 | 395 | 472 | DOE* | -4 | -7 | 0.99 | 0.01 | -3198 | 1719 |
| 0.99 | GE | 240 | 1900 | DOE* | -4 | -7 | 0.99 | 0.01 | 1418 | -762 |
| 2.22 | ZNS | 186 | 97 | ZNSE | 322 | 232 | -0.99 | 1.99 | 1157 | -622 |
| 1.08 | ZNSE | 322 | 232 | CAF2 | 33 | 13 | 1.08 | -0.08 | 1070 | -575 |
| 1.19 | ZNS | 186 | 97 | CAF2 | 33 | 13 | 1.18 | -0.18 | 982 | -528 |

(suite)

| $\sqrt{\phi A^2 + \phi B^2}$ | A | $\nu 1A$ | $\nu 2A$ | B | $\nu 1B$ | $\nu 2B$ | $\phi A$ | $\phi B$ | $\nu 1$ | $\nu 2$ |
|---|---|---|---|---|---|---|---|---|---|---|
| 1.05 | CAF2 | 33 | 13 | GASIR1 | 395 | 472 | -0.05 | 1.05 | 937 | -504 |
| *DOE = élément diffractif (Diffractive Optical Element) | | | | | | | | | | |

Pour la correction du chromatisme de L3A, le meilleur doublet est IG4/DOE. Le doublet Ge/DOE ( indiqué sur la figure 2) est aussi un bon candidat, grâce à l'indice de réfraction élevé du Germanium.

Pour le doublet ZnSe/ZnS les puissances des lentilles sont importantes. Il peut convenir pour un groupe peu ouvert, si on veut éviter des éléments diffractifs.

Le système d'imagerie selon l'invention peut être intégré dans une caméra IR, dans des jumelles IR ou dans un autre équipement optronique IR. Il peut être implanté dans un viseur de char, dans un système de détection par l'avant aux rayons infrarouges ou FLIRs (acronyme de l'expression anglo-saxonne « Forward-Looking Infra-Red system »), dans une nacelle ( « pod » en anglais) installée sur un aéronef.

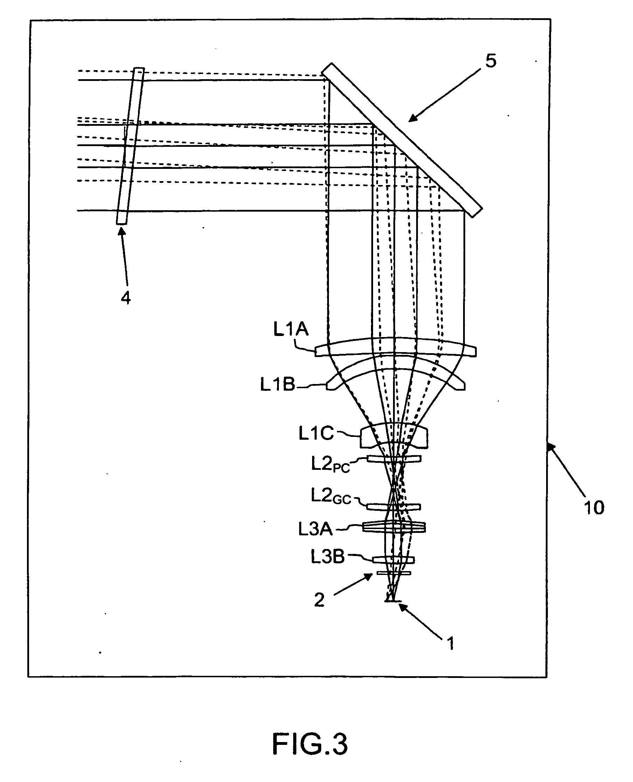

La figure 3 représente une telle implantation dans un viseur de char. Les différents modes de fonctionnement de la caméra (IR2 & IR3, PC & GC) ont été superposés sur la même figure. Le viseur de char 10 comprend un hublot 4 en Germanium, généralement placé en anti-narcisse, ainsi qu'un miroir gyrostabilisé 5. La figure 3 permet de comprendre pourquoi il est intéressant d'assurer la compacité du système d'imagerie en amont de la première lentille du système : cela permet de réduire la taille du hublot 4 et du miroir gyrostabilisé 5.

**Revendications**

1. Système d'imagerie bi-champ (petit et grand champ) comportant un détecteur optronique (1) et une combinaison optique de focales petit champ $F_{PC}$, grand champ $F_{GC}$ présentant sur un axe optique :

   - une lentille de tête (L1A),
   - une pupille d'entrée petit champ située au voisinage de la lentille de tête,
   - une pupille d'entrée grand champ réelle c'est-à-dire située en amont de la lentille de tête,
   - un plan focal intermédiaire (PFI),

   la combinaison optique comprenant sur l'axe optique les groupes dioptriques suivants : .

   - un groupe de tête (G1) convergent de focale F, avec F<$F_{PC}$/2. ce groupe (G1) comprenant la lentille de tête,
   - un groupe divergent de changement de champ (G2) mobile le long de l'axe optique, ce groupe étant situé en amont du plan focal intermédiaire (PFI) en configuration petit champ et en aval du plan focal intermédiaire en configuration grand champ,
   - un groupe relais (G3) imageant le plan focal intermédiaire sur le plan focal du détecteur,

   **caractérisé en ce que** le détecteur (1) est un détecteur IR2 et IR3 refroidi, et **en ce que** la combinaison optique comprend six lentilles dont au moins une lentille diffractive dans le groupe de tête (G1) et **en ce que** les lentilles de la combinaison optique sont composées de matériaux choisis parmi deux matériaux différents.

2. Système d'imagerie selon la revendication précédente, **caractérisé en ce que** les matériaux sont Ge/ZnS ou Ge/ZnSe.

3. Système d'imagerie selon la revendication précédente, **caractérisé en ce que** les triplets Ge(+)/élément diffractif (+)/ZnS(+) ou Ge(+)/élément diffractif(+)/ZnSe(+) sont utilisés dans le groupe de tête (G1).

4. Système d'imagerie selon la revendication précédente, **caractérisé en ce que** le groupe de tête (G1) comprend une lentille (L1A) convergente diffractive en Ge, une lentille (L1B) convergente en ZnS ou ZnSe et une lentille divergente (L1C) en Ge.

5. Système d'imagerie selon la revendication précédente, **caractérisé en ce que** le profil diffractif de la lentille convergente diffractive en Ge (L1A) est convergent et optimisé pour l'ordre 1 de diffraction en IR3, et pour l'ordre 2 de diffraction en IR2.

**6.** Système d'imagerie selon l'une des revendications précédentes, **caractérisé en ce que** le groupe (G2) comprend une lentille (L2) divergente en Ge.

**7.** Système d'imagerie selon l'une des revendications précédentes, **caractérisé en ce que** le relais (G3) comprend deux lentilles convergentes en Ge.

**8.** Système d'imagerie selon l'une des revendications précédentes, **caractérisé en ce que** le relais (G3) comprend au moins une lentille diffractive (L3A).

**9.** Système d'imagerie selon la revendication précédente, **caractérisé en ce que** le profil diffractif de la lentille diffractive (L3A) du groupe (G3) est convergent et optimisé pour l'ordre 1 de diffraction en IR3, et pour l'ordre 2 de diffraction en IR2.

**10.** Système d'imagerie selon l'une des revendications précédentes, **caractérisé en ce que** le relai (G3) comprend au moins une lentille mobile (L3A) suivant l'axe optique.

**11.** Système d'imagerie selon l'une des revendications précédentes, **caractérisé en ce que** le relais (G3) comprend au moins une lentille de microscanning (L3B) permettant de translater l'image sur le détecteur (1).

**12.** Système d'imagerie selon l'une des revendications précédentes, **caractérisé en ce que** le détecteur (1) est un détecteur linéaire ou matriciel.

**13.** Système d'imagerie selon la revendication précédente, **caractérisé en ce que** le détecteur (1) est un détecteur matriciel à multi-puits quantiques.

**14.** Système d'imagerie selon l'une des revendications précédentes, **caractérisé en ce que** le système d'imagerie le système d'imagerie présentant un écran froid (3), celui-ci forme un diaphragme d'ouverture.

**15.** Système d'imagerie selon l'une des revendications précédentes, **caractérisé en ce que** le système d'imagerie présentant un diaphragme d'ouverture, seul ce diaphragme limite les faisceaux optiques pour éviter le vignettage.

**16.** Caméra comportant un système d'imagerie selon l'une des revendications précédentes.

**17.** Jumelles comportant un système d'imagerie selon l'une des revendications 1 à 15.

**18.** Viseur de char comportant un système d'imagerie selon l'une des revendications 1 à 15.

## Claims

**1.** A dual-field (narrow and wide field) imaging system comprising an optronic detector (1) and a narrow field $F_{PC}$, wide field $F_{GC}$ focal length optical combination having, on an optical axis:

- a front lens (L1A),
- a narrow field entrance pupil located in the vicinity of the front lens,
- an actual wide field entrance pupil, that is, situated upstream of the front lens,
- an intermediate focal plane (PFI),

the optical combination comprising the following dioptric groups on the optical axis:

- a convergent front group (G1) of focal length F, wherein $F<F_{PC}/2$, this group (G1) comprising the front lens,
- a divergent field change group (G2) capable of moving along the optical axis, this group being located upstream of the intermediate focal plane (PFI) in a narrow field configuration and downstream of the intermediate focal plane in a wide field configuration,
- a relay group (G3) imaging the intermediate focal plane on the focal plane of the detector,

**characterised in that** the detector (1) is a cooled IR2 and IR3 detector, the optical combination comprises 6 lenses including at least one diffractive lens in the front group (G1) and **in that** the lenses of the optical combination are composed of materials selected from two different materials.

2. The imaging system according to the previous claim, **characterised in that** the materials are Ge/ZnS or Ge/ZnSe.

3. The imaging system according to the previous claim, **characterised in that** the triplets Ge(+)/diffractive element (+)/ZnS(+) or Ge(+)/diffractive element(+)/ZnSe(+) are used in the front group (G1).

4. The imaging system according to the previous claim, **characterised in that** the front group (G1) comprises a diffractive convergent lens (L1A) in Ge, a convergent lens (L1B) in ZnS or ZnSe and a divergent lens (L1C) in Ge.

5. The imaging system according to the previous claim, **characterised in that** the diffractive profile of the diffractive convergent lens in Ge (L1A) is convergent and optimised for diffraction order 1 in IR3 and for diffraction order 2 in IR2.

6. The imaging system according to any one of the previous claims, **characterised in that** the group (G2) comprises a divergent lens (L2) in Ge.

7. The imaging system according to any one of the previous claims, **characterised in that** the relay (G3) comprises two convergent lenses in Ge.

8. The imaging system according to any one of the previous claims, **characterised in that** the relay (G3) comprises at least one diffractive lens (L3A).

9. The imaging system according to the previous claim, **characterised in that** the diffractive profile of the diffractive lens (L3A) of the group (G3) is convergent and optimised for diffraction order 1 in IR3 and for diffraction order 2 in IR2.

10. The imaging system according to any one of the previous claims, **characterised in that** the relay (G3) comprises at least one lens (L3A) capable of moving along the optical axis.

11. The imaging system according to the previous claim, **characterised in that** the relay (G3) comprises at least one micro-scanning lens (L3B) allowing the image to be relayed to the detector (1).

12. The imaging system according to any one of the previous claims, **characterised in that** the detector (1) is a linear or matrix detector.

13. The imaging system according to the previous claim, **characterised in that** the detector (1) is a multiple quantum well matrix detector.

14. The imaging system according to any one of the previous claims, **characterised in that** the imaging system has a cold screen (3) which forms an aperture diaphragm.

15. The imaging system according to any one of the previous claims, **characterised in that** the imaging system has an opening diaphragm and only this diaphragm limits the optical beams to prevent vignetting.

16. A camera comprising an imaging system according to any one of the previous claims.

17. Binoculars comprising an imaging system according to any one of claims 1 to 15.

18. A tank sighting device comprising an imaging system according to any one of claims 1 to 15.

**Patentansprüche**

1. Zweifeld-(enges und weites Feld)-Bildgebungssystem, das einen optronischen Detektor (1) und eine optische Brennweitenkombination aus engem Feld $F_{PC}$ und weitem Feld $F_{GC}$ umfasst, das auf einer optischen Achse Folgendes aufweist:

- eine vordere Linse (L1A),
- eine in der Nähe der vorderen Linse befindliche Engfeld-Eintrittspupille,
- eine reelle Weitfeld-Eintrittspupille, d.h. die sich oberhalb der vorderen Linse befindet;
- eine Zwischenfokalebene (PF1),

wobei die optische Kombination die folgenden dioptrischen Gruppen auf der optischen Achse umfasst:

- eine konvergente vordere Gruppe (G1) mit Brennweite F, wobei $F<F_{PC}/2$, wobei diese Gruppe (G1) die vordere Linse umfasst,
- eine divergente Feldwechselgruppe (G2), die sich entlang der optischen Achse bewegt, wobei sich diese Gruppe oberhalb der Zwischenfokalebene (PF1) in einer Engfeldkonfiguration und unterhalb der Zwischenfokalebene in einer Weitfeldkonfiguration befindet,
- eine Relaisgruppe (G3), die die Zwischenfokalebene auf der Fokalebene des Detektors abbildet,

**dadurch gekennzeichnet, dass** der Detektor (1) ein gekühlter IR2- und IR3-Detektor ist, und **dadurch**, dass die optische Kombination 6 Linsen umfasst, von denen wenigstens eine diffraktive Linse in der vorderen Gruppe (G1) ist, und **dadurch**, dass die Linsen der optischen Kombination aus Materialien bestehen, die aus zwei verschiedenen Materialien ausgewählt sind.

2. Bildgebungssystem nach dem vorherigen Anspruch, **dadurch gekennzeichnet, dass** die Materialien Ge/ZnS oder Ge/ZnSe sind.

3. Bildgebungssystem nach dem vorherigen Anspruch, **dadurch gekennzeichnet, dass** die Tripletts Ge(+)/diffraktives Element(+)/ZnS(+) oder Ge(+)/diffraktives Element(+)/ZnSe(+) in der vorderen Gruppe (G1) verwendet werden.

4. Bildgebungssystem nach dem vorherigen Anspruch, **dadurch gekennzeichnet, dass** die vordere Gruppe (G1) eine diffraktive konvergente Linse (L1A) in Ge, eine konvergente Linse (L1B) in ZnS oder ZnSe und eine divergente Linse (L1C) in Ge umfasst.

5. Bildgebungssystem nach dem vorherigen Anspruch, **dadurch gekennzeichnet, dass** das diffraktive Profil der konvergenten diffraktiven Linse in Ge (L1A) konvergent und für die Diffraktionsordnung 1 in IR3 und für die Diffraktionsordnung 2 in IR2 optimiert ist.

6. Bildgebungssystem nach einem der vorherigen Ansprüche, **dadurch gekennzeichnet, dass** die Gruppe (G2) eine divergente Linse (L2) in Ge umfasst.

7. Bildgebungssystem nach einem der vorherigen Ansprüche, **dadurch gekennzeichnet, dass** das Relais (G3) zwei konvergente Linsen in Ge umfasst.

8. Bildgebungssystem nach einem der vorherigen Ansprüche, **dadurch gekennzeichnet, dass** das Relais (G3) wenigstens eine Diffraktionslinse (L3A) umfasst.

9. Bildgebungssystem nach dem vorherigen Anspruch, **dadurch gekennzeichnet, dass** das diffraktive Profil der diffraktiven Linse (L3A) der Gruppe (G3) konvergent und für die Diffraktionsordnung 1 in IR3 und für die Diffraktionsordnung 2 in IR2 optimiert ist.

10. Bildgebungssystem nach einem der vorherigen Ansprüche, **dadurch gekennzeichnet, dass** das Relais (G3) wenigstens eine Linse (L3A) umfasst, die sich entlang der optischen Achse bewegen kann.

11. Bildgebungssystem nach einem der vorherigen Ansprüche, **dadurch gekennzeichnet, dass** das Relais (G3) wenigstens eine Mikroabtastlinse (L3B) umfasst, die das Translatieren des Bildes auf dem Detektor (1) zulässt.

12. Bildgebungssystem nach einem der vorherigen Ansprüche, **dadurch gekennzeichnet, dass** der Detektor (1) ein Linear- oder Matrixdetektor ist.

13. Bildgebungssystem nach dem vorherigen Anspruch, **dadurch gekennzeichnet, dass** der Detektor (1) ein Multi-Quantum-Well-Matrixdetektor ist.

**14.** Bildgebungssystem nach einem der vorherigen Ansprüche, **dadurch gekennzeichnet, dass** das Bildgebungssystem einen Kälteschirm (3) hat, der eine Aperturblende bildet.

**15.** Bildgebungssystem nach einem der vorherigen Ansprüche, **dadurch gekennzeichnet, dass** das Bildgebungssystem eine Öffnungsblende hat und nur diese Blende die optischen Strahlen begrenzt, um Vignettierung zu verhindern.

**16.** Kamera, die ein Bildgebungssystem nach einem der vorherigen Ansprüche umfasst.

**17.** Fernglas, das ein Bildgebungssystem nach einem der Ansprüche 1 bis 15 umfasst.

**18.** Sichteinrichtung für einen Panzer, die ein Bildgebungssystem nach einem der Ansprüche 1 bis 15 umfasst.

FIG.1

FIG.2

FIG.3